# EUROPÄISCHE PATENTANMELDUNG

(11) **EP 4 391 352 A1**
(43) Veröffentlichungstag der Anmeldung: **26.06.2024**
(21) Anmeldenummer: 22216342.0
(22) Anmeldetag: 23.12.2022
(51) Int. Cl.: H02P 6/00, H02P 21/00, H02P 25/06

(54) **VERFAHREN ZUR STEUERUNG EINES LINEARMOTORBASIERTEN TRANSPORTSYSTEMS UND TRANSPORTSYSTEM**

(71) Anmelder: Siemens Aktiengesellschaft, 80333 München (DE)
(72) Erfinder: Cramer, Christian, 90431 Nürnberg (DE); Kunze, Philipp, 90489 Nürnberg (DE); Streubühr, Martin, 90513 Zirndorf (DE); Wedel, Bernd, 91096 Möhrendorf (DE)
(74) Vertreter: Siemens Patent Attorneys

(57) **Zusammenfassung**

Die Erfindung betrifft ein Verfahren zur Steuerung wenigstens eines Linearmotors (2, 14) für ein Transportsystem (1),
wobei der wenigstens eine Linearmotor (2, 14) eine Mehrzahl von Spulen (5a, 5b, 5c, 15a, 15b, 15c) aufweist,
und wobei das Transportsystem (1) einen Transportläufer (4) aufweist, welcher an wenigstens einer Seite (6a) eine Mehrzahl von Magneten (7a, 7b, 7c, 7d) aufweist, wobei wenigstens zwei Magnete (7a, 7b, 7c, 7d) eine sich voneinander unterscheidende magnetische Polarität aufweisen, und welcher ein Rückschlusselement (8), insbesondere ein Eisenrückschlusselement, aufweist,
wobei die Steuereinrichtung (3) den wenigstens einen Linearmotor (2, 14) derart ansteuert, dass eine Längskraft (12b, 13b, F1_{L}, F2_{L}) auf den Transportläufer (4) in einer Längsrichtung des Linearmotors (2, 14) ausgeübt wird, um eine Linearbewegung (L) des Transportläufers (4) in der Längsrichtung zu bewirken. Das Verfahren ist dadurch gekennzeichnet, dass die Steuereinrichtung (3) den wenigstens einen Linearmotor (2, 14) derart ansteuert, dass eine Querkraft (12a, 13a, F1_{Q}, F2_{Q}), senkrecht zu der Längskraft (12b, 13b, F1_{L}, F2_{L}), auf den Transportläufer (4) ausgeübt wird, derart, dass eine Querbewegung des Transportläufers (4) in Richtung der Spulen (5a, 5b, 5c, 15a, 15b, 15c) oder von den Spulen (5a, 5b, 5c, 15a, 15b, 15c) weg bewirkt wird, wobei ein feldverändernder Strom (I_{Q}) im Rahmen der Bewirkung der Querbewegung des Transportläufers (4) betragsmäßig Null ist.

## Beschreibung

Die Erfindung betrifft ein Transportsystem, umfassend:
- wenigstens einen Linearmotor, welcher eine Mehrzahl von Spulen aufweist,
- eine Steuereinrichtung, die zur Steuerung des wenigstens einen Linearmotors ausgebildet ist,
- einen Transportläufer, welcher an wenigstens einer Seite eine Mehrzahl von Magneten aufweist, wobei wenigstens zwei Magnete eine sich voneinander unterscheidende magnetische Polarität aufweisen, und welcher ein Rückschlusselement, insbesondere ein Eisenrückschlusselement, aufweist,
wobei die Steuereinrichtung dazu ausgebildet ist, den wenigstens einen Linearmotor derart anzusteuern, dass eine Längskraft auf den Transportläufer in einer Längsrichtung des Linearmotors ausgeübt wird, um eine Linearbewegung des Transportläufers in der Längsrichtung zu bewirken.

Außerdem betrifft die Erfindung ein Verfahren zur Steuerung wenigstens eines Linearmotors für ein Transportsystem,
wobei der wenigstens eine Linearmotor eine Mehrzahl von Spulen aufweist,
und wobei das Transportsystem einen Transportläufer aufweist, welcher an wenigstens einer Seite eine Mehrzahl von Magneten aufweist, wobei wenigstens zwei Magnete eine sich voneinander unterscheidende magnetische Polarität aufweisen, und welcher ein Rückschlusselement, insbesondere ein Eisenrückschlusselement, aufweist,
wobei die Steuerung den wenigstens einen Linearmotor derart ansteuert, dass eine Längskraft auf den Transportläufer in einer Längsrichtung des Linearmotors ausgeübt wird, um eine Linearbewegung des Transportläufers in der Längsrichtung zu bewirken.

Moderne Produktionsmaschinen erfordern flexible Maschinenlayouts, bei denen Materialflüsse getrennt und zusammengeführt werden können. Für maximale Produktivität sind zusätzlich hohe Prozessgeschwindigkeiten notwendig. In der AT 517219 B1 sind Werkstückträger offenbart, die durch eine Weiche in drei Schritten fahren. Zwei Linearmotoren liegen gegenüber mit geringem Abstand vor der Weiche und größer werdendem Abstand nach der Weiche. Die Anzugskräfte F1 und F2 auf den Werkstückträger werden durch einen feldverändernden I_{D}-Strom verstärkt und gegenüberliegend abgeschwächt, sodass der Werkstückträger auf der in Fahrtrichtung links gelegenen Linearmotorstrecke weiterfährt. Bei einer umgekehrten Ansteuerung fährt der Werkstückträger auf der in Fahrtrichtung rechts gelegenen Linearmotorstrecke weiter.

In der AT 520088 B1 und der EP 3661033 A1 sind zusätzliche Geräte und Aktoren vorgesehen, wodurch die Kosten für eine solches Transportsystem relativ hoch sind. In der DE 10 2019 117 351 A1 werden die magnetischen Anzugskräfte durch einen zusätzlichen motorangetrieben Aktor überwunden, wodurch ebenfalls zusätzliche Kosten entstehen.

Es ist Aufgabe der vorliegenden Erfindung ein Transportsystem bzw. ein Verfahren zur Steuerung eines Linearmotors für ein Transportsystem bereitzustellen, welche eine Weichenfunktionalität bei möglichst geringem Aufwand an Energie und Material ermöglichen.

Das eingangs genannte Transportsystem ist erfindungsgemäß dadurch gekennzeichnet, dass die Steuereinrichtung dazu ausgebildet ist, den wenigstens einen Linearmotor derart anzusteuern, dass eine Querkraft, senkrecht zu der Längskraft, auf den Transportläufer ausgeübt wird, derart, dass eine Querbewegung des Transportläufers in Richtung der Spulen oder von den Spulen weg bewirkt wird, wobei ein feldverändernder Strom im Rahmen der Bewirkung der Querbewegung des Transportläufers betragsmäßig Null ist.

Bei der Steuereinrichtung kann es sich beispielsweise um einen SIMATIC S7 Controller der Firma SIEMENS handeln. Die Querbewegung des Transportläufers kann bevorzugt zur Realisierung einer Weichenfunktionalität verwendet werden. Hierbei wird der Transportläufer von einer ersten Richtung in einer andere Richtung abgelenkt, um beispielsweise eine alternative Fahrstrecke als eine Hauptstrecke zu befahren.

Das erfindungsgemäße Transportsystem ist in besonders vorteilhafter Art und Weise dazu ausgebildet, eine Querkraft auf den Transportläufer auszuüben, ohne dass hierbei ein feldverändernder Strom zur Bewirkung der Querkraft notwendig wäre. Im Gegensatz zu bekannten Transportsystemen, insbesondere im Gegensatz zu dem aus der AT 517219 B1 bekannten, muss kein feldverändernder Strom eingeprägt werden, um die Querbewegung des Transportläufers zu bewirken. Hierdurch vereinfacht sich die Steuerung des Linearmotors und kann energieeffizienter vollzogen werden. Zusätzliche Aktoren oder vergleichbare Geräte, wie sie der Stand der Technik teilweise benötigt, sind bei dem erfindungsgemäßen Transportsystem nicht notwendig.

Besonders bevorzugt ist die Steuereinrichtung des Transportsystems dazu ausgebildet, den wenigstens einen Linearmotor derart anzusteuern, dass die Querbewegung des Transportläufers in Richtung der Spulen oder von den Spulen weg durch eine Beschleunigung des Transportläufers in der Längsrichtung des Linearmotors bewirkt wird. Dies kann die Steuereinrichtung durch eine geeignete Bestromung des Linearmotors erreichen. Je nach geforderter Ablenkung des Transportläufers kann die Beschleunigung unterschiedlich gewählt werden. Für nähere Details hierzu sei auf die Beschreibung der Ausführungsbeispiele verwiesen.

Ganz besonders bevorzugt ist die Steuereinrichtung dazu ausgebildet, die Beschleunigung des Transportläufers als eine hochfrequente Modulation mit alternierenden Vorzeichen auszubilden, wobei eine Frequenz der Modulation vorzugsweise mehr als 100 Hertz beträgt. Dabei kann die hochfrequente Modulation der Beschleunigung des Transportläufers durch eine entsprechend hochfrequente Modulation eines Spulenstroms des Linearmotors bewirkt werden. Durch die alternierende Beschleunigung wird der Transportläufer in Fahrtrichtung abwechselnd vor- und zurückgezogen. Zusätzlich entsteht durch den Stromfluss durch die Spulen des Linearmotors eine Anziehungskraft auf das Rückschlusselement des Transportläufers (Reluktanzkraft) - und zwar unabhängig davon, ob der Transportläufer positiv oder negativ beschleunigt wird. Die Kräfte in Fahrtrichtung liegen im Mittel durch die alternierende Beschleunigung bei Null, der Transportläufer wird also nicht unerwünscht gebremst oder (positiv) beschleunigt.

Im Rahmen einer bevorzugten Weiterbildung der Erfindung weist der Linearmotor des Transportsystems kein Rückschlusselement, insbesondere kein Eisenrückschlusselement, auf. Dies kann bedeuten, dass in einem Stator des Linearmotors kein Eisenrückschluss, kein Rückschlussblech, keine Rückschlussplatte, keine Eisenzähne oder dergleichen konstruiert sind, es sich also um Luftspulen handelt. Hierdurch wird keine permanente magnetische Anziehungskraft auf den Linearmotor durch die Permanentmagnete des Transportläufers erzeugt. Durch den Wegfall der permanenten magnetischen Anziehungskräfte müssen geringere Querkräfte bewirkt werden, um eine Richtungsänderung des Transportläufers zur Realisierung der Weichenfunktionalität zu bewirken. Das Transportsystem kann dadurch energieeffizienter betrieben werden. In der AT 517219 B1 müssen über die Feldstromregelung die Kräfte der Permanentmagnete des Transportläufers ausgeglichen werden. Die entgegensetzen Kräfte haben einen nicht-linearen Kraftverlauf und erfordern daher eine sehr präzise mechanische Ausrichtung der Weichenteile. Die Weiterbildung der Erfindung ohne Rückschluss im Linearmotor eliminiert die störenden Permanentkräfte und erlaubt größere mechanische Toleranzen in einer mit dem Transportsystem realisierten Weiche.

Besonders bevorzugt weist das Transportsystem wenigstens einen ersten Linearmotor und einen zweiten, in einem Abstand im Wesentlichen parallel zu dem ersten Linearmotor angeordneten Linearmotor auf. Dabei weist der Transportläufer an einer weiteren Seite eine Mehrzahl von Magneten auf, wobei wenigstens zwei Magnete eine sich voneinander unterscheidende magnetische Polarität aufweisen, und wobei das Rückschlusselement zwischen den beiden Seiten mit den Magneten angeordnet ist. Die Steuereinrichtung ist dabei dazu ausgebildet, den ersten Linearmotor und den zweiten Linearmotor derart anzusteuern, dass eine Längskraft auf den zwischen dem ersten und dem zweiten Linearmotor angeordneten Transportläufer in einer gemeinsamen Längsrichtung des ersten und des zweiten Linearmotors ausgeübt wird, um eine Linearbewegung des Transportläufers in der Längsrichtung zu bewirken, und bei dem die Steuereinrichtung dazu ausgebildet ist, den ersten und/oder den zweiten Linearmotor derart anzusteuern, dass eine Querkraft, senkrecht zu der Längskraft, auf den Transportläufer ausgeübt wird, derart, dass eine Querbewegung des Transportläufers in Richtung der Spulen des ersten Linearmotors oder in Richtung der Spulen des zweiten Linearmotors bewirkt wird, wobei ein feldverändernder Strom im Rahmen der Bewirkung der Querbewegung des Transportläufers betragsmäßig Null ist.

Eine Anziehung des Transportläufers in Richtung des ersten Linearmotors kann dabei eine Bewegung des Transportläufers entlang einer ersten Richtungsfahrbahn bewirken, während eine Anziehung in Richtung des zweiten Linearmotors eine Bewegung des Transportläufers entlang einer zweiten Richtungsfahrbahn bewirken kann. Dadurch ist auf besonders einfache Art und Weise eine Weichenfunktionalität realisierbar.

Besonders bevorzugt weisen sowohl der erste als auch der zweite Linearmotor keine Rückschlusselemente, insbesondere keinen Eisenrückschluss, auf. Die damit verbundenen Vorteile wurden vorstehend bereits erläutert.

Die eingangs genannte Aufgabe wird zudem durch ein Verfahren zur Steuerung wenigstens eines Linearmotors für ein Transportsystem gelöst, wobei der wenigstens eine Linearmotor eine Mehrzahl von Spulen aufweist, und wobei das Transportsystem einen Transportläufer aufweist, welcher an wenigstens einer Seite eine Mehrzahl von Magneten aufweist, wobei wenigstens zwei Magnete eine sich voneinander unterscheidende magnetische Polarität aufweisen, und welcher ein Rückschlusselement, insbesondere ein Eisenrückschlusselement, aufweist, wobei die Steuerung den wenigstens einen Linearmotor derart ansteuert, dass eine Längskraft auf den Transportläufer in einer Längsrichtung des Linearmotors ausgeübt wird, um eine Linearbewegung des Transportläufers in der Längsrichtung zu bewirken. Das Verfahren ist dadurch gekennzeichnet, dass die Steuereinrichtung den wenigstens einen Linearmotor derart ansteuert, dass eine Querkraft, senkrecht zu der Längskraft, auf den Transportläufer ausgeübt wird, derart, dass eine Querbewegung des Transportläufers in Richtung der Spulen oder von den Spulen weg bewirkt wird, wobei ein feldverändernder Strom im Rahmen der Bewirkung der Querbewegung des Transportläufers betragsmäßig Null ist.

Die Steuereinrichtung steuert den wenigstens einen Linearmotor bevorzugt derart an, dass die Querbewegung des Transportläufers in Richtung der Spulen oder von den Spulen weg durch eine Beschleunigung des Transportläufers in der Längsrichtung des Linearmotors bewirkt wird.

Die Steuereinrichtung kann die Beschleunigung des Transportläufers als eine hochfrequente Modulation mit alternierenden Vorzeichen ausbilden, wobei eine Frequenz der Modulation vorzugsweise mehr als 100 Hertz beträgt. Dabei kann die Steuereinrichtung die hochfrequente Modulation der Beschleunigung des Transportläufers durch eine entsprechend hochfrequente Modulation eines Spulenstroms des Linearmotors bewirken.

Wie zuvor bereits erwähnt, weist der Linearmotor dabei vorzugsweise kein Rückschlusselement, insbesondere kein Eisenrückschlusselement, auf.

Im Rahmen einer bevorzugten Weiterbildung des Verfahrens weist das Transportsystem wenigstens einen ersten Linearmotor und einen zweiten, in einem Abstand im Wesentlichen parallel zu dem ersten Linearmotor angeordneten Linearmotor auf, wobei der Transportläufer an einer weiteren Seite eine Mehrzahl von Magneten aufweist, wobei wenigstens zwei Magnete eine sich voneinander unterscheidende magnetische Polarität aufweisen, und wobei das Rückschlusselement zwischen den beiden Seiten mit den Magneten angeordnet ist, wobei die Steuereinrichtung den ersten und den zweiten Linearmotor derart ansteuert, dass eine Längskraft auf den zwischen dem ersten und dem zweiten Linearmotor angeordneten Transportläufer in einer gemeinsamen Längsrichtung des ersten und des zweiten Linearmotors ausgeübt wird, um eine Linearbewegung des Transportläufers in der Längsrichtung zu bewirken, und bei dem die Steuereinrichtung den ersten und/oder den zweiten Linearmotor derart ansteuert, dass eine Querkraft, senkrecht zu der Längskraft, auf den Transportläufer ausgeübt wird, derart, dass eine Querbewegung des Transportläufers in Richtung der Spulen des ersten Linearmotors oder in Richtung der Spulen des zweiten Linearmotors bewirkt wird, wobei ein feldverändernder Strom im Rahmen der Bewirkung der Querbewegung des Transportläufers betragsmäßig Null ist.

Die zuvor formulierte Aufgabe wird zudem gelöst durch ein Computerprogramm, welches bei einem Ablauf auf einer Steuereinrichtung die Steuereinrichtung dazu veranlasst, ein Verfahren wie zuvor erläutert durchzuführen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Es zeigen:
- FIG 1: ein linearmotorbasiertes Transportsystem gemäß einem ersten Aspekt,
- FIG 2: ein linearmotorbasiertes Transportsystem gemäß einem zweiten Aspekt,
- FIG 3: ein linearmotorbasiertes Transportsystem gemäß einem dritten Aspekt,
- FIG 4: ein linearmotorbasiertes Transportsystem gemäß einem vierten Aspekt, und
- FIG 5: ein linearmotorbasiertes Transportsystem gemäß einem fünften Aspekt.

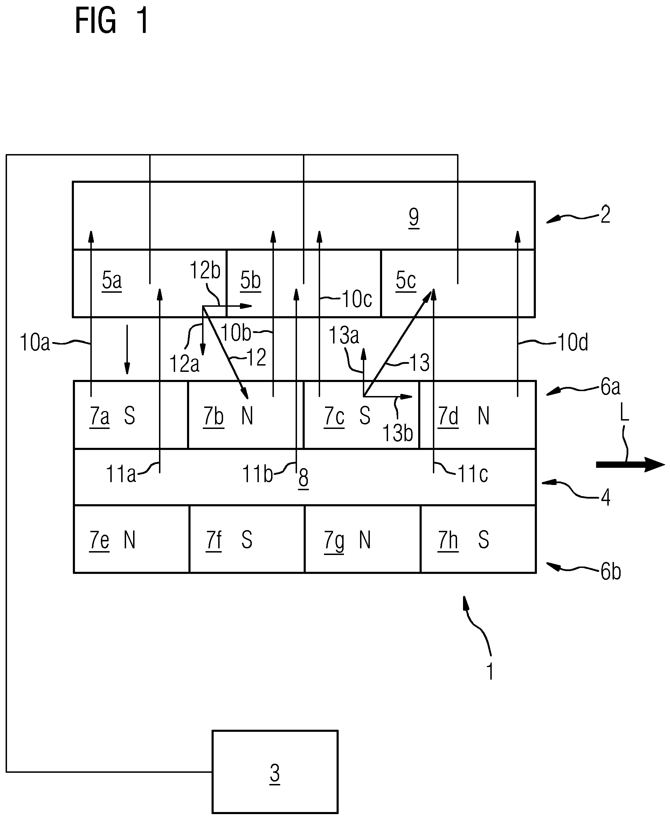

In FIG 1 ist ein Transportsystem 1 dargestellt, welches einen Linearmotor 2, eine Steuereinrichtung 3 und einen Transportläufer 4 umfasst. Der Linearmotor 2 weist eine Mehrzahl von elektromagnetischen Spulen 5a, 5b, 5c und einen Eisenrückschlusselement 9 auf.

Der Transportläufer 4 weist an einer ersten Seite 6a, welche dem Linearmotor 2 gegenüberliegt, eine Mehrzahl von Magneten 7a, 7b, 7c, 7d auf. Die Magnete 7a, 7b, 7c, 7d weisen eine sich unterscheidende Polarität auf (S kennzeichnet einen magnetischen Südpol, N einen magnetischen Nordpol). An einer zweiten Seite 6b weist der Transportläufer 4 ebenfalls eine Mehrzahl von Magneten 7e, 7f, 7g, 7h mit sich unterscheidender Polarität auf. Zwischen den beiden Seiten 6a, 6b mit den Magneten 7a, 7b, 7c, 7d, 7e, 7f, 7g, 7h weist der Transportläufer 4 ein Eisenrückschlusselement 8 auf. Die Magnete 7a, 7b, 7c, 7d, 7e, 7f, 7g, 7h sind in diesem Ausführungsbeispiel als Permanentmagnete ausgebildet. Sie können aber auch als Elektromagnete ausgebildet sein, die erst bei einem Stromfluss durch die Elektromagnete eine magnetische Anziehungskraft bewirken.

Die Steuereinrichtung 3 ist mit den Spulen 5a, 5b, 5c des Linearmotors 2 verbunden und speist einen Strom in die Spulen 5a, 5b, 5c ein. Dabei kann jede Spule 5a, 5b, 5c separat und unabhängig von den anderen Spulen 5a, 5b, 5c mit Strom versorgt werden.

Im Folgenden werden die im Transportsystem 1 wirkenden magnetischen Kräfte erläutert: Die Magnete 7a, 7b, 7c, 7d auf der ersten Seite 6a üben eine permanente magnetische Anziehungskraft 10a, 10b, 10c, 10d auf das Eisenrückschlusselement 9 des Linearmotors 2 aus und ziehen den Transportläufer 4 in Richtung des Linearmotors 2. Die Anziehungskräfte, die durch die Magnete 7e, 7f, 7g, 7h auf das Eisenrückschlusselement 9 wirken, sind vernachlässigbar.

Durch einen entsprechenden Stromfluss durch die Spulen 5a, 5b, 5c des Linearmotors 2 wird ein magnetisches Feld induziert, welches eine magnetische Anziehungskraft 11a, 11b, 11c auf das Eisenrückschlusselement 8 des Transportläufers 4 ausübt und den Transportläufer in einer Querrichtung in Richtung des Linearmotors 2 zieht. Gleichzeitig wechselwirken die durch die Spulen 5a, 5b, 5c induzierten Magnetfelder je nach Ausgestaltung der Spule 5a, 5b, 5c bzw. je nach Richtung des Stromflusses durch die Spulen 5a, 5b, 5c mit den Magneten 7a, 7b, 7c, 7d auf der ersten Seite 6a des Transportläufers 4 (die zweite Seite 6b ist wiederum vernachlässigbar).

In dem Ausführungsbeispiel gemäß FIG 1 wird zu einem bestimmten Zeitpunkt eine abstoßende magnetische Kraft 12 zwischen der in der Zeichnung linken Spule 5a und dem als magnetischen Nordpol ausgebildeten zweiten Magneten 7b von links ausgeübt. Die Kraft 12 weist eine Querkomponente 12a und eine Längskomponente 12b auf. Die Querkomponente 12a stößt den Transportläufer 4 von dem Linearmotor 2 ab, die Längskomponente 12b bewirkt eine Linearbewegung des Transportläufers 4 in einer Längsrichtung L.

Die zweite Spule 5b ist zu diesem Zeitpunkt stromlos und bewirkt daher keine magnetischen Kräfte zwischen Linearmotor 2 und Transportläufer 4.

Zu dem bestimmten Zeitpunkt wird eine abstoßende magnetische Kraft 13 zwischen der in der Zeichnung rechten Spule 5c und dem als magnetischen Südpol ausgebildeten dritten Magneten 7c von links ausgeübt. Die Kraft 13 weist eine Querkomponente 13a und eine Längskomponente 13b auf. Die Querkomponente 13a zieht den Transportläufer 4 zu dem Linearmotor 2 hin, die Längskomponente 12b bewirkt eine Linearbewegung des Transportläufers 4 in einer Längsrichtung L.

Die Steuereinrichtung 3 kann die Spulen 5a, 5c zu dem bestimmten Zeitpunkt so mit Strom versorgen, dass der Transportläufer 4 in einem konstanten Abstand zu dem Linearmotor 2 gehalten wird und dabei in Längsrichtung L fortbewegt wird. Wenn aber eine Querbewegung des Transportläufers 4 erwünscht ist, um beispielsweise eine Weichenfunktionalität zu bewirken, kann die Steuereinrichtung 3 das Verhältnis zwischen der magnetischen Kraft 12 der ersten Spule 5a und der magnetischen Kraft 13 der dritten Spule 5c so anpassen, dass die den Transportläufer 4 anziehende Querkraft 13a (in Verbindung mit den statischen Kräften 10a, 10b, 10c, 10d, 11a, 11c) größer ist als die den Transportläufer 4 abstoßende Querkraft 12a. Hierdurch erfährt der Transportläufer 4 in Summe eine Anziehung in Richtung des Linearmotors 2, wodurch der Transportläufer 4 eine Querbewegung vornimmt.

Es ist wesentlich, dass die Querbewegung des Transportläufers 4 nicht durch eine Reduktion von abstoßenden Kräften zwischen der ersten Spule 5a und dem ersten Magnet 7a, oder zwischen der dritten Spule 5c und dem vierten Magneten 7d bewirkt wird. Mit anderen Worten ist ein feldverändernder Strom (bei Linearmotoren auch als I_{D} bezeichnet) durch die Spulen 5a, 5b, 5c im Rahmen der Bewirkung der Querbewegung des Transportläufers 4 betragsmäßig Null. Im Gegensatz zu der beispielsweise aus der AT 0517219 B1 bekannten Schwächung der Anziehung des Transportläufers 4 durch eine durch einen feldschwächenden Strom induzierte Abstoßung des Transportläufers 4 wird die Querbewegung des Transportläufers 4 über eine Anpassung der (Längs-)Beschleunigung des Transportläufers 4 bewirkt. Man spricht in diesem Zusammenhang von einem I_{Q}-Strom, welcher die Längsbewegung des Transportläufers 4 bewirkt.

In FIG 1 sind nur drei Spulen 5a, 5b, 5c dargestellt. Es ist aber offensichtlich, dass der Linearmotor 2 zahlreiche weitere Spulen 5a, 5b, 5c aufweisen kann, um eine längere Transportstrecke realisieren zu können.

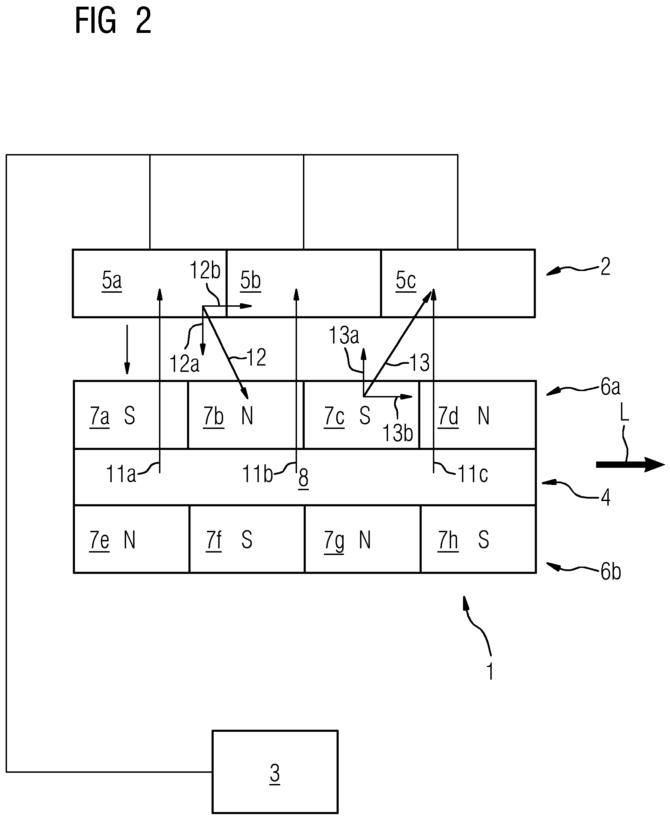

Der Linearmotor 2 kann ohne Eisenrückschlusselement 9 ausgebildet sein, wie es in FIG 2 dargestellt ist. Mit anderen Worten umfasst der Linearmotor 2 dabei nur Luftspulen 5a, 5b, 5c. Der Linearmotor 2 wird damit ohne Eisenzähne und ohne Rückschlussplatte konstruiert und weist insbesondere keinen Eisenrückschluss, kein Rückschlussblech und auch kein sonstiges Rückschlusselement auf. Dadurch entfallen die (konstanten) Anziehungskräfte 10a, 10b, 10c, 10d zwischen den Magneten 7a, 7b, 7c, 7d des Transportläufers 4 und dem Linearmotor 2. Dadurch müssen relative geringe Querkräfte 12a, 13a durch die Spulen 5a, 5c (über den sogenannten I_{Q}-Strom) erzeugt werden, um beispielweise einen Streckenwechsel auszuführen.

Es ist vorteilhaft, wenn speziell in einem Weichenbereich des Transportsystems 1 auf das Rückschlusselement 9 des Linearmotors 2 verzichtet wird, da der Linearmotor 2 ohne das Rückschlusselement 9 eine geringere Effizienz aufweist. Ein genereller Verzicht auf das Rückschlusselement 9 ist daher nicht von Vorteil.

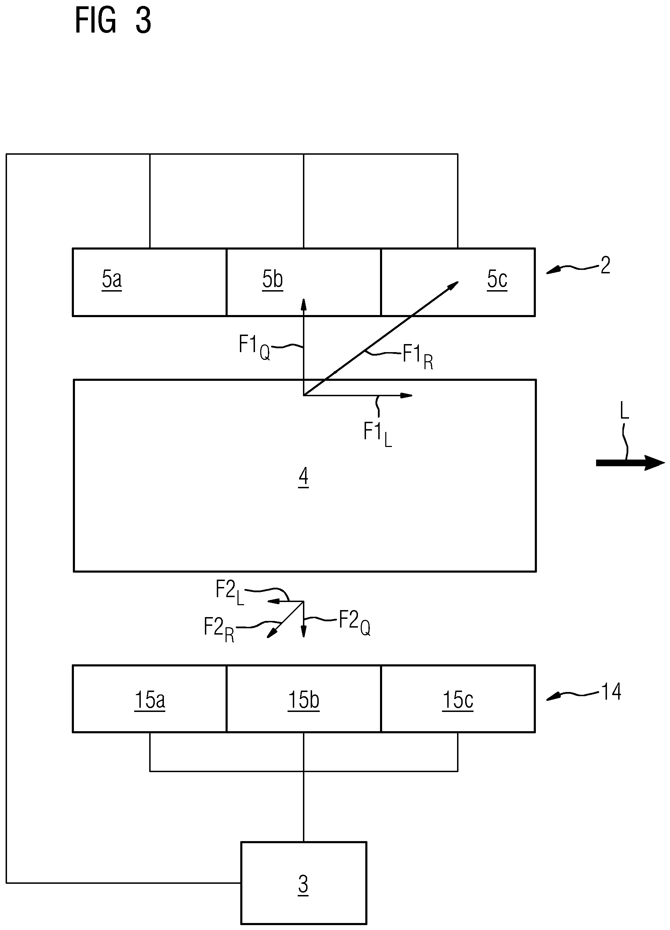

In FIG 3 ist eine weitere mögliche Ausgestaltung eines erfindungsgemäßen Transportsystems 1 dargestellt. Das Transportsystem 1 weist zusätzlich zu dem (ersten) Linearmotor 2 einen zweiten Linearmotor 14 auf, welcher baugleich zu dem ersten Linearmotor 2 ausgebildet sein kann. Der zweite Linearmotor 14 weist (wenigstens) drei elektromagnetische Spulen 15a, 15b, 15c auf. Beide Linearmotoren 2, 14 weisen in dem abgebildeten Bereich kein Rückschlusselement auf (vgl. FIG 2). Der Transportläufer 4 ist vereinfacht dargestellt (ohne Darstellung einzelner Magnete, die aber analog zu den FIG 1 und FIG 2 vorhanden sind) und wird zwischen den beiden Linearmotoren 2, 14 in einer Längsrichtung L bewegt. Wie zuvor anhand von FIG 1 und FIG 2 beschrieben, erzeugen beide Linearmotoren 2, 14 durch eine geeignete Bestromung der Spulen 5a, 5b, 5c, 15a, 15b, 15c eine magnetische Kraft F1_{R}, F2_{R}, die eine Längskomponente F1_{L}, F2_{L} und eine Querkomponente F1_{Q}, F2_{Q} aufweisen.

Im vorliegenden Beispiel wird der Transportläufer 4 näher an dem ersten Linearmotor 2 als an dem zweiten Linearmotor 14 geführt. Dies wird durch eine entsprechend größere, durch den ersten Linearmotor 2 bewirkte Querkomponente F1_{Q} realisiert. Ein feldschwächender Strom I_{D} ist auch hier Null. Die Querkomponente F2_{Q}, die von dem zweiten Linearmotor 14 bewirkt wird, ist hier negativ und damit nicht Null, um einen sanften Übergang des Transportläufers aus einer näher bei dem zweiten Linearmotor 14 verlaufenden Bahn in Richtung des ersten Linearmotors 2 zu ermöglichen (z.B. bei einer Weiche). Die Querkomponente F2_{Q} kann aber auch größer Null sein, sie muss nur kleiner als die erste Querkomponente F1_{Q} sein, um in Summe eine Anziehung zu dem ersten Linearmotor 2 zu bewirken.

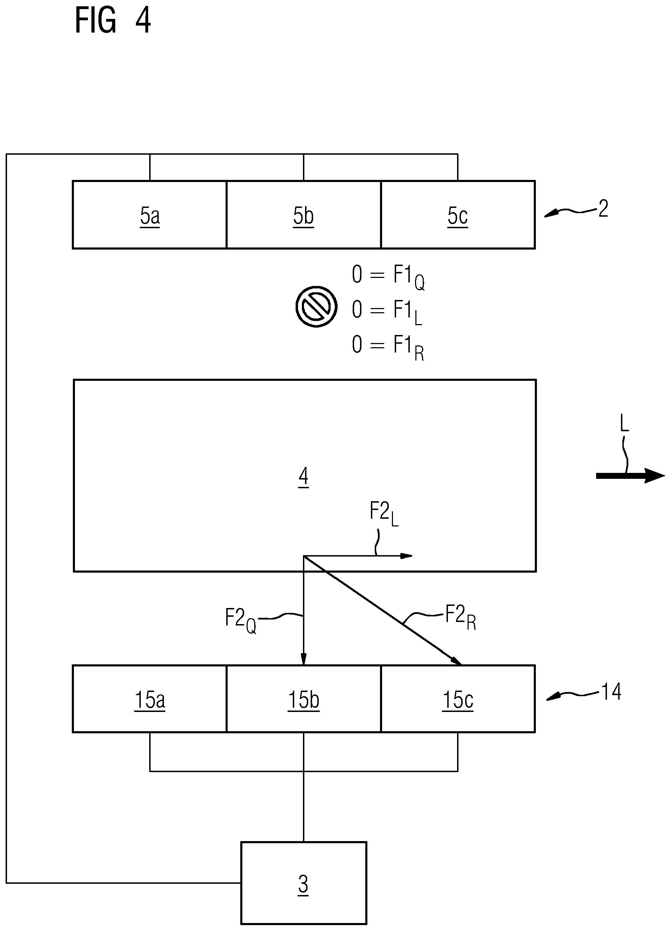

Eine weitere mögliche Realisierung der Erfindung ist in FIG 4 dargestellt. Hier bewirkt der erste Linearmotor 2 keine magnetische Anziehung, die durch die Spulen 5a, 5b, 5c bewirkt wird (Spulenstrom ist Null). Der zweite Linearmotor 14 bewirkt analog zu FIG 3 eine Kraftkomponente F2_{Q} in Richtung des zweiten Linearmotors 14, um den Transportläufer 4 näher an dem zweiten Linearmotor 14 zu führen. Die Kraftkomponente F2_{Q} (wie auch die Kraftkomponenten F2_{L} und F2_{R}) wird dabei sowohl bei einem Beschleunigungsvorgang (I_{Q} > 0) als auch bei einem Bremsvorgang (I_{Q} < 0) durch die Spulen 15a, 15b, 15c des zweiten Linearmotors 14 bewirkt.

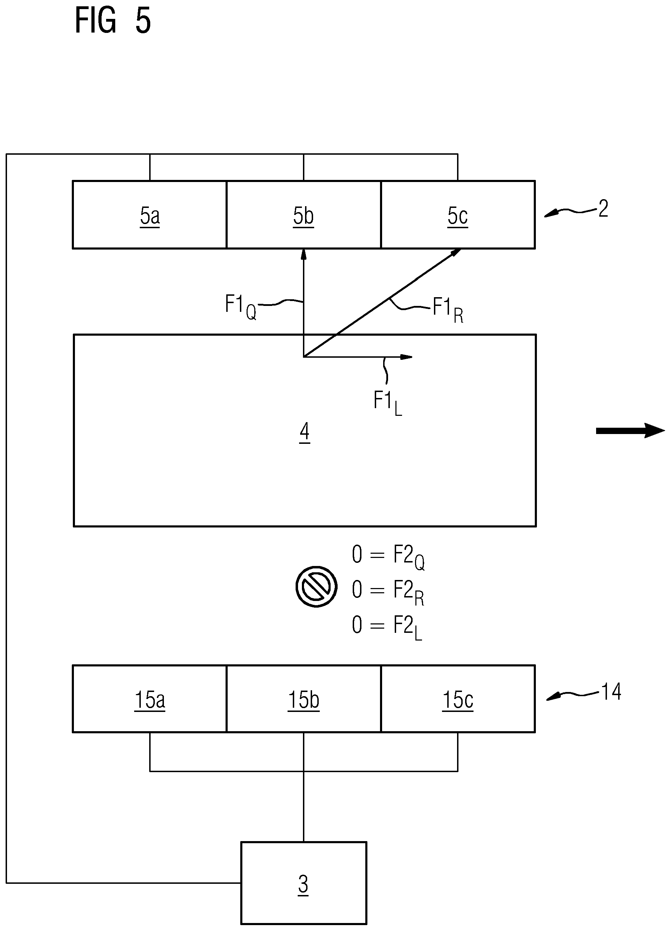

In FIG 5 ist der umgekehrte Fall wie in FIG 4 dargestellt. Hier bewirkt der zweite Linearmotor 14 keine magnetische Anziehung, die durch die Spulen 15a, 15b, 15c bewirkt wird (Spulenstrom ist Null). Der erste Linearmotor 2 bewirkt analog zu FIG 3 eine Kraftkomponente F1_{Q} in Richtung des ersten Linearmotors 2, um den Transportläufer 4 näher an dem ersten Linearmotor 2 zu führen. Die Kraftkomponente F1_{Q} (wie auch die Kraftkomponenten F1_{L} und F1_{R}) wird dabei sowohl bei einem Beschleunigungsvorgang (I_{Q} > 0) als auch bei einem Bremsvorgang (I_{Q} < 0) durch die Spulen 5a, 5b, 5c des ersten Linearmotors 2 bewirkt.

Zur Realisierung einer Querbewegung des Transportläufers 4 ohne einen feldverändernden Strom I_{D}, was die Kernidee der vorliegenden Erfindung darstellt, kann für jeden Linearmotor 2, 14 der FIG 3 und FIG 5 (bei nur einem Linearmotor 2 analog nur für den einen Motor) ein Stromregler und ein Drehzahlregler Teil der Steuereinrichtung 3 sein. Aus der Drehzahlregelung ergibt sich ein I_{Q}-Strom entsprechend der Drehzahlsollwertvorgabe. Z.B. bei konstanter Geschwindigkeit ist dieser I_{Q}-Strom nahezu konstant und relativ gering, da keine Beschleunigungskräfte wirken. Die vorgegebene Anziehungskraft wird zu einem Zusatz-I_{Q}-Strom umgerechnet. Der Zusatz-I_{Q}-Strom wird hochfrequent moduliert (z.B. > 100Hz) und überlagert. Beide Stromsollwerte werden dem Stromregler zugeführt.

Der Zusatz-I_{Q}-Strom ist immer ein Wert größer oder gleich Null und entspricht der Amplitude des hochfrequenten Signals. Der modulierte Zusatz-I_{Q}-Strom zieht den Transportläufer 4 abwechselnd vor und zurück. Gleichzeitig entsteht eine Anziehungskraft zwischen den Spulen 5a, 5b, 5c, 15a, 15b, 15c und den Magneten 7a, 7b, 7c, 7d, 7e, 7f in dem Transportläufer 4. Im Mittel gleichen sich die abwechselnden Vor- und Zurückbewegungen aus und die Anziehungskräfte bleiben erhalten. Es entsteht demnach im Mittel keine Geschwindigkeitsänderung aus der Antriebsfunktion.

Die effektive Anziehungskraft ist abhängig von Frequenz und Amplitude und muss durch die Antriebsfunktion entsprechend zum Anziehungskraft-Sollwert in mindestens der Amplitude und ggf. auch der Frequenz moduliert werden. Die Magnete 7a, 7b, 7c, 7d, 7e, 7f können gedämpft gelagert werden und/oder die Frequenz passend zur Mechanik verändert werden.

## Patentansprüche

1. Transportsystem (1), umfassend:
- wenigstens einen Linearmotor (2, 14), welcher eine Mehrzahl von Spulen (5a, 5b, 5c, 15a, 15b, 15c) aufweist,
- eine Steuereinrichtung (3), die zur Steuerung des wenigstens einen Linearmotors (2, 14) ausgebildet ist,
- einen Transportläufer (4), welcher an wenigstens einer Seite (6a, 6b) eine Mehrzahl von Magneten (7a, 7b, 7c, 7d, 7e, 7f, 7g, 7h) aufweist, wobei wenigstens zwei Magnete (7a, 7b, 7c, 7d, 7e, 7f, 7g, 7h) eine sich voneinander unterscheidende magnetische Polarität aufweisen, und welcher ein Rückschlusselement (8), insbesondere ein Eisenrückschlusselement, aufweist,
wobei die Steuereinrichtung (3) dazu ausgebildet ist, den wenigstens einen Linearmotor (2, 14) derart anzusteuern, dass eine Längskraft (12b, 13b) auf den Transportläufer (4) in einer Längsrichtung (L) des Linearmotors (2, 14) ausgeübt wird, um eine Linearbewegung des Transportläufers (4) in der Längsrichtung (L) zu bewirken,
**dadurch gekennzeichnet, dass**
die Steuereinrichtung (3) dazu ausgebildet ist, den wenigstens einen Linearmotor (2) derart anzusteuern, dass eine Querkraft (12a, 13a), senkrecht zu der Längskraft (12b, 13b), auf den Transportläufer (4) ausgeübt wird, derart, dass eine Querbewegung des Transportläufers (4) in Richtung der Spulen (5a, 5b, 5c, 15a, 15b, 15c) oder von den Spulen (5a, 5b, 5c, 15a, 15b, 15c) weg bewirkt wird, um insbesondere eine Weichenfunktionalität zu bewirken, wobei ein feldverändernder Strom im Rahmen der Bewirkung der Querbewegung des Transportläufers (4) betragsmäßig Null ist.

2. Transportsystem (1) nach Anspruch 1, bei dem die Steuereinrichtung (3) dazu ausgebildet ist, den wenigstens einen Linearmotor (2, 14) derart anzusteuern, dass die Querbewegung des Transportläufers (4) in Richtung der Spulen (5a, 5b, 5c, 15a, 15b, 15c) oder von den Spulen (5a, 5b, 5c, 15a, 15b, 15c) weg durch eine Beschleunigung des Transportläufers (4) in der Längsrichtung (L) des Linearmotors (2, 14) bewirkt wird.

3. Transportsystem (1) nach Anspruch 2, bei dem die Steuereinrichtung (3) dazu ausgebildet ist, die Beschleunigung des Transportläufers (4) als eine hochfrequente Modulation mit alternierenden Vorzeichen auszubilden, wobei eine Frequenz der Modulation vorzugsweise mehr als 100 Hertz beträgt.

4. Transportsystem (1) nach Anspruch 3, bei dem die Steuereinrichtung (3) dazu ausgebildet ist, die hochfrequente Modulation der Beschleunigung des Transportläufers (4) durch eine entsprechend hochfrequente Modulation eines Spulenstroms des Linearmotors (2, 14) zu bewirken.

5. Transportsystem (1) nach einem der vorangegangenen Ansprüche, bei dem der Linearmotor (2, 14) kein Rückschlusselement (9), insbesondere kein Eisenrückschlusselement, aufweist.

6. Transportsystem (1) nach einem der vorangegangenen Ansprüche, welches wenigstens einen ersten Linearmotor (2) und einen zweiten, in einem Abstand im Wesentlichen parallel zu dem ersten Linearmotor (2) angeordneten Linearmotor (14) aufweist, und wobei der Transportläufer (4) an einer weiteren Seite (6b) eine Mehrzahl von Magneten (7e, 7f, 7g, 7h) aufweist, wobei wenigstens zwei Magnete (7e, 7f, 7g, 7h) eine sich voneinander unterscheidende magnetische Polarität aufweisen, und wobei das Rückschlusselement (8) zwischen den beiden Seiten (6a, 6b) mit den Magneten (7a, 7b, 7c, 7d, 7e, 7f, 7g, 7h) angeordnet ist,
und wobei die Steuereinrichtung (3) dazu ausgebildet ist, den ersten Linearmotor (2) und den zweiten Linearmotor (14) derart anzusteuern, dass eine Längskraft (12b, 13b, F1_{L}, F2_{L}) auf den zwischen dem ersten Linearmotor (2) und dem zweiten Linearmotor (14) angeordneten Transportläufer (4) in einer gemeinsamen Längsrichtung des ersten Linearmotors (2) und des zweiten Linearmotors (14) ausgeübt wird, um eine Linearbewegung (L) des Transportläufers (4) in der Längsrichtung zu bewirken, und bei dem die Steuereinrichtung (3) dazu ausgebildet ist, den ersten Linearmotor (2) und/oder den zweiten Linearmotor (14) derart anzusteuern, dass eine Querkraft (12a, 13a, F1_{Q}, F2_{Q}), senkrecht zu der Längskraft (12b, 13b, F1_{L}, F2_{L}), auf den Transportläufer (4) ausgeübt wird, derart, dass eine Querbewegung des Transportläufers (4) in Richtung der Spulen (5a, 5b, 5c) des ersten Linearmotors (2) oder in Richtung der Spulen (15a, 15b, 15c) des zweiten Linearmotors (14) bewirkt wird, wobei ein feldverändernder Strom (I_{Q}) im Rahmen der Bewirkung der Querbewegung des Transportläufers (4) betragsmäßig Null ist.

7. Transportsystem (1) nach Anspruch 6, bei dem der erste Linearmotor (2) und der zweite Linearmotor (14) keine Rückschlusselemente (9), insbesondere keine Eisenrückschlusselemente, aufweisen.

8. Verfahren zur Steuerung wenigstens eines Linearmotors (2, 14) für ein Transportsystem (1),
wobei der wenigstens eine Linearmotor (2, 14) eine Mehrzahl von Spulen (5a, 5b, 5c, 15a, 15b, 15c) aufweist,
und wobei das Transportsystem (1) einen Transportläufer (4) aufweist, welcher an wenigstens einer Seite (6a) eine Mehrzahl von Magneten (7a, 7b, 7c, 7d) aufweist, wobei wenigstens zwei Magnete (7a, 7b, 7c, 7d) eine sich voneinander unterscheidende magnetische Polarität aufweisen, und welcher ein Rückschlusselement (8), insbesondere ein Eisenrückschlusselement, aufweist,
wobei die Steuereinrichtung (3) den wenigstens einen Linearmotor (2, 14) derart ansteuert, dass eine Längskraft (12b, 13b, F1_{L}, F2_{L}) auf den Transportläufer (4) in einer Längsrichtung des Linearmotors (2, 14) ausgeübt wird, um eine Linearbewegung (L) des Transportläufers (4) in der Längsrichtung zu bewirken,
**dadurch gekennzeichnet, dass**
die Steuereinrichtung (3) den wenigstens einen Linearmotor (2, 14) derart ansteuert, dass eine Querkraft (12a, 13a, F1_{Q}, F2_{Q}), senkrecht zu der Längskraft (12b, 13b, F1_{L}, F2_{L}), auf den Transportläufer (4) ausgeübt wird, um insbesondere eine Weichenfunktionalität zu bewirken, derart, dass eine Querbewegung des Transportläufers (4) in Richtung der Spulen (5a, 5b, 5c, 15a, 15b, 15c) oder von den Spulen (5a, 5b, 5c, 15a, 15b, 15c) weg bewirkt wird, wobei ein feldverändernder Strom (I_{Q}) im Rahmen der Bewirkung der Querbewegung des Transportläufers (4) betragsmäßig Null ist.

9. Verfahren nach Anspruch 8, bei dem die Steuereinrichtung (3) den wenigstens einen Linearmotor (2, 14) derart ansteuert, dass die Querbewegung des Transportläufers (4) in Richtung der Spulen (5a, 5b, 5c, 15a, 15b, 15c) oder von den Spulen (5a, 5b, 5c, 15a, 15b, 15c) weg durch eine Beschleunigung des Transportläufers (4) in der Längsrichtung (L) des Linearmotors (2, 14) bewirkt wird.

10. Verfahren nach Anspruch 9, bei dem die Steuereinrichtung (3) die Beschleunigung des Transportläufers (4) als eine hochfrequente Modulation mit alternierenden Vorzeichen ausbildet, wobei eine Frequenz der Modulation vorzugsweise mehr als 100 Hertz beträgt.

11. Verfahren nach Anspruch 10, bei dem die Steuereinrichtung (3) die hochfrequente Modulation der Beschleunigung des Transportläufers (4) durch eine entsprechend hochfrequente Modulation eines Spulenstroms des Linearmotors (2, 14) bewirkt.

12. Verfahren nach einem der Ansprüche 8 bis 11, bei dem der Linearmotor (2, 14) kein Rückschlusselement (9), insbesondere kein Eisenrückschlusselement, aufweist.

13. Verfahren nach einem der Ansprüche 8 bis 12, bei dem das Transportsystem (1) wenigstens einen ersten Linearmotor (2) und einen zweiten, in einem Abstand im Wesentlichen parallel zu dem ersten Linearmotor (2) angeordneten Linearmotor (14) aufweist, und wobei der Transportläufer (4) an einer weiteren Seite (6b) eine Mehrzahl von Magneten (7e, 7f, 7g, 7h) aufweist, wobei wenigstens zwei Magnete (7e, 7f, 7g, 7h) eine sich voneinander unterscheidende magnetische Polarität aufweisen, und wobei das Rückschlusselement (8) zwischen den beiden Seiten (6a, 6b) mit den Magneten (7a, 7b, 7c, 7d, 7e, 7f, 7g, 7h) angeordnet ist, wobei die Steuereinrichtung (3) den ersten Linearmotor (2) und den zweiten Linearmotor (14) derart ansteuert, dass eine Längskraft (12b, 13b, F1_{L}, F2_{L}) auf den zwischen dem ersten Linearmotor (2) und dem zweiten Linearmotor (14) angeordneten Transportläufer (4) in einer gemeinsamen Längsrichtung des ersten Linearmotors (2) und des zweiten Linearmotors (14) ausgeübt wird, um eine Linearbewegung des Transportläufers (4) in der Längsrichtung (L) zu bewirken, und bei dem die Steuereinrichtung (3) den ersten Linearmotor (2) und/oder den zweiten Linearmotor (14) derart ansteuert, dass eine Querkraft (12a, 13a, F1_{Q}, F2_{Q}), senkrecht zu der Längskraft (12b, 13b, F1_{L}, F2_{L}), auf den Transportläufer ausgeübt wird, derart, dass eine Querbewegung des Transportläufers (4) in Richtung der Spulen (5a, 5b, 5c) des ersten Linearmotors (2) oder in Richtung der Spulen (15a, 15b, 15c) des zweiten Linearmotors (14) bewirkt wird, um insbesondere eine Weichenfunktionalität zu bewirken, wobei ein feldverändernder Strom (I_{Q}) im Rahmen der Bewirkung der Querbewegung des Transportläufers (4) betragsmäßig Null ist.

14. Computerprogramm, welches bei einem Ablauf auf einer Steuereinrichtung (3) die Steuereinrichtung (3) dazu veranlasst, ein Verfahren gemäß einem der Ansprüche 8 bis 13 durchzuführen.
